# EUROPÄISCHE PATENTSCHRIFT

(11) **EP 4 227 871 B1**
(45) Veröffentlichungstag und Bekanntmachung des Hinweises auf die Patenterteilung: **21.08.2024**
(21) Anmeldenummer: 23153241.7
(22) Anmeldetag: 25.01.2023
(51) Int. Cl.: G06Q 10/0631, H01M 10/42

(54) **PROJEKTUNTERSTÜTZUNG BEI DER NUTZUNG EINES ELEKTROGERÄTS MIT EINEM AKKUPACK**
PROJECT ASSISTANCE IN THE USE OF AN ELECTRICAL DEVICE HAVING A BATTERY PACK
ASSISTANCE DE PROJET LORS DE L'UTILISATION D'UN APPAREIL ÉLECTRIQUE AVEC UN BLOC D'ACCUMULATEUR

(30) Priorität: 11.02.2022 DE 102022103305
(43) Veröffentlichungstag der Anmeldung: 16.08.2023
(73) Patentinhaber: Einhell Germany AG, 94405 Landau / Isar (DE)
(72) Erfinder: THANNHUBER, Markus, 94405 Landau/Isar (DE)
(74) Vertreter: Hofstetter, Schurack & Partner

(56) Entgegenhaltungen:
- EP-A1- 3 950 230
- WO-A1-2020/236710
- DE-A1- 102019 211 238
- US-A1- 2019 353 712

## Beschreibung

Die vorliegende Erfindung betrifft ein Verfahren und ein System zur Projektunterstützung bei der Nutzung eines Elektrogeräts mit einem Akkupack.

Zur Durchführung von Projekten unter Verwendung von Elektrogeräten, insbesondere Elektrowerkzeugen, beispielsweise im Heimwerkerbereich, kann das Bedürfnis nach einer Unterstützung bei der Durchführung des Projekts bestehen, beispielsweise, um einen Benutzer dabei anzuleiten, welche Arbeitsschritte oder Projektschritte in welcher Reihenfolge und/oder auf welche Weise durchgeführt werden sollten.

Die DE 10 2019 211 238 A1 betrifft ein Sensormodul für ein Elektrogerät, mit einer Identifikationsvorrichtung, die das Elektrogerät identifizieren kann, und die Sensormodulsteuereinheit in Abhängigkeit des identifizierten Elektrogeräts das Elektrogerät steuern kann. Die WO 2020/236710 A1 offenbart ein sprachgesteuertes Bauwerkzeug.

Es ist eine Aufgabe der vorliegenden Erfindung, eine möglichst flexible und/oder zuverlässige Projektunterstützung für den Benutzer eines Elektrogeräts zur Verfügung zu stellen.

Diese Aufgabe wird gelöst durch den jeweiligen Gegenstand der unabhängigen Ansprüche. Vorteilhafte Weiterbildungen und bevorzugte Ausführungsformen sind Gegenstand der abhängigen Ansprüche.

Die Erfindung beruht auf dem Gedanken, einem Benutzer Benutzerinformationen betreffend einen Projektschritt auf wenigstens zwei Informationskanälen zur Verfügung zu stellen, wobei ein Informationskanal durch das Akkupack des Elektrogeräts selbst realisiert wird und wenigstens ein weiterer Informationskanal über wenigstens eine zu dem Elektrogerät und dem Akkupack externe Recheneinheit.

Gemäß einem Aspekt der Erfindung wird ein Verfahren zur Projektunterstützung bei der Nutzung eines Elektrowerkzeugs mit einem Akkupack angegeben. Dabei werden auf einem Datenspeicher des Akkupacks Projektdaten betreffend eine Sequenz von Projektschritten oder einen Teil der Sequenz gespeichert. Die Projektdaten beinhalten für jeden Projektschritt der Sequenz von Projektschritten eine zugehörige Benutzerinformation. Mittels einer Ausgabevorrichtung des Akkupacks wird, beispielsweise angesteuert durch eine Steuereinheit des Akkupacks, für einen vorgegebenen Projektschritt der Sequenz von Projektschritten die zugehörige Benutzerinformation in visueller und/oder akustischer Form ausgegeben. Die Benutzerinformationen für den vorgegebenen Projektschritt und/oder weitere Benutzerinformationen für den vorgegebenen Projektschritt mittels wenigstens einer externen Recheneinheit, insbesondere wenigstens einer zu dem Elektrogerät und insbesondere Akku externen Recheneinheit, in visueller und/oder akustischer Form ausgegeben und/oder zum Abrufen durch einen Benutzer bereitgestellt.

Das Akkupack ist mit dem Elektrogerät mechanisch und elektrisch verbindbar. Beispielsweise kann das Akkupack, insbesondere zerstörungsfrei lösbar, mit einem Gehäuse des Elektrogeräts verbunden werden, beispielsweise über eine Rastverbindung, eine Steckverbindung und/oder eine Klemmverbindung. Insbesondere kann die mechanische Verbindung des Akkupacks mit dem Gehäuse des Elektrogeräts als formschlüssige und/oder kraftschlüssige Verbindung ausgestaltet sein, ohne dass eine stoffschlüssige Verbindung vorliegt. Mit anderen Worten kann die mechanische Verbindung des Akkupacks mit dem Gehäuse des Elektrogeräts gelöst werden, ohne dass eine stoffschlüssige Verbindung zu lösen ist. Vorzugsweise kann die mechanische Verbindung bestimmungsgemäß manuell ohne den Einsatz sonstiger Werkzeuge gelöst werden. Mit anderen Worten ist das Akkupack als Wechsel-Akkupack, insbesondere System-Akkupack ausgestaltet. Zur elektrischen und mechanischen Verbindung können die Gehäuse des Akkupacks und des Elektrogeräts jeweilige Schnittstellen aufweisen.

Zur Energieversorgung des Elektrogeräts weist das Akkupack wenigstens eine Akkumulatorzelle auf, vorzugsweise mehrere in Reihe und/oder parallel verschaltete Akkumulatorzellen. Eine elektrische Verbindung der wenigstens einen Akkumulatorzelle mit dem Elektrogerät, beispielsweise einem Motor des Elektrogeräts, kann über einen oder mehrere lösbare elektrische Kontakte, beispielsweise Klemmkontakte oder Steckkontakte, insbesondere sogenannte Tulpenkontakte oder Schwertkontakte, erfolgen. Beispielsweise können an den Schnittstellen der entsprechenden Gehäuse jeweils zueinander kompatible Stecker oder Buchsen beziehungsweise Aufnahmen oder dergleichen vorgesehen sein, um die elektrische Verbindung des Akkupacks mit dem Elektrogerät zu erzielen.

Die Projektschritte der Sequenz von Projektschritten spezifizieren ein Projekt oder einen Teil des Projekts, wobei wenigstens ein Teil der Projektschritte unter Verwendung des mit dem Akkupack betreibbaren Elektrogeräts durchgeführt werden kann. Insbesondere ist es nicht notwendigerweise erforderlich, dass das Elektrogerät in allen Projektschritten verwendet wird oder verwendet werden kann. In verschiedenen Projektschritten können auch verschiedene Elektrogeräte einsetzbar sein, wobei das Akkupack gegebenenfalls auch zum Betrieb mehrerer verschiedener Elektrogeräte ausgelegt sein kann.

Dass die Projektschritte in Form der vordefinierten Sequenz gegeben sind, kann insbesondere derart verstanden werden, dass die Sequenz einer definierten Reihenfolge der individuellen Projektschritte definiert. Die Reihenfolge der Projektschritte ist beispielsweise erforderlich oder vorteilhaft, um das gewünschte Projekt durchführen zu können. Ein Projektschritt kann dabei eine oder mehrere Tätigkeiten, die durch den Benutzer durchzuführen sind, beinhalten. Die Benutzerinformation, die für einen Projektschritt in dem Datenspeicher gespeichert ist, beschreibt eine oder mehrere Tätigkeiten und/oder eine Bezeichnung des jeweiligen Projektschritts und/oder ein einzusetzendes Elektrogerät und/oder ein einzusetzendes sonstiges Zubehör und/oder Material oder dergleichen. Beispielsweise kann die Benutzerinformation Informationen betreffend eines oder mehrere Erfordernisse oder Empfehlungen zur Durchführung des jeweiligen Projektschritts beinhalten, wie etwa Informationen betreffend eine Werkzeugauswahl oder Werkzeugkonfiguration. Alternativ oder zusätzlich kann die Benutzerinformation auch Informationen zu Größen, Maßen, Formbemaßungen, Lagebemaßungen, Materialparametern und so weiter beinhalten.

Die Projektdaten beinhalten also insbesondere die Benutzerinformation für die einzelnen Projektschritte, beinhalten insbesondere aber auch Informationen betreffend die entsprechende Reihenfolge der Projektschritte innerhalb der Sequenz. Unter Verwendung dieser Information kann die Steuereinheit die entsprechenden Benutzerinformationen insbesondere auch in der entsprechenden Reihenfolge der Projektschritte verarbeiten, also beispielsweise durch einen Sprachsyntheseschaltkreis in ein entsprechendes Audiosignal umwandeln und durch den Lautsprecher ausgeben. Die Ausgabe der einzelnen Sprachausgaben erfolgt dabei vorzugsweise entsprechend einem jeweiligen Projektstatus, der der Steuereinheit durch eine Benutzerrückmeldung oder eine zeitliche Vorgabe oder eine sonstige Information zur Verfügung gestellt werden kann.

Die Projektdaten können auf einem externen Datenträger bereitgestellt und auf den Datenspeicher des Akkupacks geladen werden. Alternativ können die Projektdaten beispielsweise auch von einem externen elektronischen Gerät, beispielsweise einem Servercomputer, einem Cloud-Computersystem oder einem mobilen elektronischen Endgerät über eine drahtlose Kommunikationsvorrichtung auf das Akkupack und insbesondere den Datenspeicher des Akkupacks geladen werden.

Die Ausgabe der Benutzerinformationen durch die Ausgabevorrichtung des Akkupacks realisiert einen ersten Informationskanal für den Benutzer. Die Ausgabe der Benutzerinformationen in visueller Form kann beispielsweise durch die Anzeige eines oder mehrerer Bilder, Bildsequenzen oder Videos auf einem Display des Akkupack beinhalten. Die Ausgabe der Benutzerinformationen in visueller Form kann durch die Ausgabe der Benutzerinformationen in akustischer Form, also insbesondere durch einen Lautsprecher des Akkupacks, ergänzt werden. Alternativ können die Benutzerinformationen auch nur in akustischer Form, insbesondere mittels des Lautsprechers, ausgegeben werden.

Die Ausgabe der Benutzerinformationen und/oder der weiteren Benutzerinformationen mittels der wenigstens einen externen Recheneinheit und/oder die Bereitstellung zum Abrufen durch einen Benutzer realisieren einen zweiten zusätzlichen Informationskanal für den Benutzer. Dabei kann die Ausgabe mittels der wenigstens einen externen Recheneinheit auch das entsprechende Ansteuern wenigstens einer weiteren Ausgabevorrichtung beinhalten. Die wenigstens eine externe Recheneinheit kann beispielsweise ein Servercomputersystem, auch als Cloud-Computersystem bezeichnet, und/oder ein mobiles elektronisches Endgerät, wie etwa ein Smartphone, einen Tabletcomputer, einen Notebookcomputer, und/oder ein stationäres Endgerät, wie etwa einen PC, und so weiter enthalten. Um die Benutzerinformationen und/oder der weiteren Benutzerinformationen zum Abrufen durch einen Benutzer bereitzustellen, kann die wenigstens eine externe Recheneinheit die Benutzerinformationen und/oder der weiteren Benutzerinformationen oder davon abgeleitete Informationen in einem Benutzerprofil oder Benutzerkonto des Benutzers hinterlegen oder über eine Softwareapplikation, auch als App bezeichnet, auf der wenigstens einen externen Recheneinheit verfügbar machen.

Durch das erfindungsgemäße Verfahren wird gewissermaßen ein omnipräsentes Benutzerschnittstellensystem mit zwei oder mehr Informationskanälen zur Verfügung gestellt. Zum Durchführen des Projekts benutzt der Benutzer gegebenenfalls ohnehin das Elektrogerät und dementsprechend das Akkupack, sodass der erste Informationskanal unmittelbar verfügbar ist, wenn eine entsprechende Anleitung benötigt wird. Durch die Bereitstellung des zweiten Informationskanals kann der Benutzer aber auch unabhängig von dem Elektrogerät und dem Akkupack Informationen über das Projekt oder den nächsten Projektschritt erhalten, beispielsweise wenn er gerade nicht an dem Projekt arbeitet.

Der vorgegebene Projektschritt kann auf verschiedene Art und Weise vorgegeben werden. Die Steuereinheit ist dazu eingerichtet, einen aktuellen Projektstatus zu bestimmen und den vorgegebenen Projektschritt abhängig von dem aktuellen Projektstatus aus der Sequenz auszuwählen beziehungsweise aus dem Datenspeicher auszulesen.

Der Projektstatus entspricht dabei insbesondere der Information, welche Projektschritte der Sequenz von Projektschritten bereits vergangen oder erledigt sind beziehungsweise welche noch bevorstehen beziehungsweise welcher der aktuelle oder unmittelbar bevorstehende Projektschritt ist. Diese Information kann die Steuereinheit beispielsweise basierend auf einem vorgegebenen Zeitplan, basierend auf einer Benutzereingabe oder auf Messungen von Betriebsparametern des Elektrogeräts oder des Akkupacks bestimmen.

Die Steuereinheit kann den Projektstatus beispielsweise an die wenigstens eine externe Recheneinheit und/oder einen Servercomputer beziehungsweise ein Cloud-Computersystem übermitteln. So kann insbesondere eine Synchronisierung des Projektstatus erreicht werden.

Alternativ kann die Steuereinheit den Projektstatus, insbesondere über eine Kommunikationsschnittstelle des Akkupacks zur drahtlosen Kommunikation, von der wenigstens einen externen Recheneinheit erhalten. Auf diese Weise kann auch eine Synchronisierung verschiedener Informationskanäle für den Benutzer erzielt werden. Zum einen kann also der aktuelle Projektstatus durch die Steuereinheit des Akkupacks bestimmt werden, zum anderen kann der aktuelle Projektstatus auch anderen elektronischen Geräten, beispielsweise mobilen elektronischen Endgeräten oder Desktopcomputern oder dergleichen, zur Verfügung gestellt werden, die dem Benutzer bei Bedarf weitere andere oder anders aufbereitete Informationen betreffend das Projekt und insbesondere einen aktuellen Projektschritt zur Verfügung stellen können.

Gemäß zumindest einer Ausführungsform des Verfahrens wird wenigstens ein erster Teil der Benutzerinformationen für den vorgegebenen Projektschritt durch eine Bild- oder Videoausgabe auf einem Display des Akkupacks ausgegeben.

So lässt sich eine besonders hohe Informationsdichte erreichen, die an den Benutzer übermittelt wird. Es lassen sich außerdem konkrete visuelle Darstellungen der anstehenden Arbeitsschritte, Positionen an Werkstücken und so weiter darstellen.

Gemäß zumindest einer Ausführungsform wird wenigstens ein zweiter Teil der Benutzerinformationen für den vorgegebenen Projektschritt durch einen Lautsprecher des Akkupacks ausgegeben.

Mit anderen Worten enthält der erste Informationskanal einen Sprachkanal zur Anleitung des Benutzers. Dadurch ist eine detaillierte Anleitung möglich, ohne dass der Benutzer seine aktuelle Tätigkeit unterbrechen muss beziehungsweise das Elektrogerät aus der Hand legen muss oder verlassen muss. Selbst wenn das Akkupack aktuell gerade nicht in Verwendung ist, der Benutzer also ein anderes Elektrogerät oder kein Elektrogerät benutzt, befindet sich das Akkupack in der Regel in der unmittelbaren Umgebung des Benutzers, sodass dieser selbst dann wie beschreiben angeleitet werden kann.

Gemäß zumindest einer Ausführungsform beinhalten die Projektdaten den zweiten Teil der Benutzerinformationen für den vorgegebenen Projektschritt in Form eines Benutzertexts. Mittels eines Sprachsyntheseschaltkreises des Akkupacks, insbesondere der Steuereinheit, wird ein dem Benutzertext entsprechendes Audiosignal erzeugt. Zum Ausgeben des zweiten Teils der Benutzerinformationen wird mittels des Lautsprechers basierend auf dem Audiosignal eine Sprachausgabe erzeugt.

Der Benutzertext beinhaltet eines oder mehrere Worte, vorzugsweise mehrere Worte in einer vorbestimmten Abfolge. Der Benutzertext ist insbesondere in Form einer Textdatei oder einer Binärdatei, welche den Benutzertext darstellt, auf dem Datenspeicher gespeichert.

Dies hat insbesondere den Vorteil, dass aufgrund der Bereitstellung der Projektdaten beziehungsweise der Benutzertexte in Textform nur eine relativ geringe Menge an Daten von außerhalb des Akkupacks auf den Datenspeicher des Akkupacks übertragen werden muss. Insbesondere ist es nicht erforderlich, digitalisierte Audiospektren oder sonstige Sprachdateien, welche die Sprachausgabe direkt definieren könnten, auf das Akkupack zu übertragen, da dieses selbst den Sprachsyntheseschaltkreis beinhaltet. Dies wiederum hat den Vorteil, dass zur Kommunikation des Akkupacks mit einem Servercomputer Funknetzwerke eingesetzt werden können, die lediglich für einen relativ geringen Datendurchsatz ausgelegt sind. Es kommen also insbesondere Mobilfunknetzwerke oder Niedrigenergieweitverkehrnetze, LPWAN (englisch: "Low Power Wide Area Network"), und insbesondere NB-loT-Netzwerke (englisch: "Narrow-Band Internet of Things") in Frage. So kann in entsprechenden Ausführungsformen mit Vorteil beispielsweise auf ein WLAN-Modul in dem Akkupack verzichtet werden.

Ein weiterer Vorteil liegt darin, dass das Akkupack definitionsgemäß mit der wenigstens einen Akkumulatorzelle ausgestattet ist und dementsprechend stets Energie für den Betrieb des Sprachsyntheseschaltkreises beziehungsweise zur Kommunikation mit der wenigstens einen externen Recheneinheit zur Verfügung steht. Selbst wenn das Akkupack beziehungsweise die Akkumulatorzellen nicht mehr ausreichend geladen sind, um einen Motor des Elektrogeräts anzutreiben oder dergleichen, steht nämlich in der Regel immer noch ausreichend Energie zum Betrieb des Sprachsyntheseschaltkreises und/oder zur Kommunikation zur Verfügung, da die hierfür erforderliche Energiemenge um ein Vielfaches kleiner ist und Akkumulatorzellen, insbesondere Lithium-Ionen-Akkumulatorzellen, in der Regel nicht vollständig entladen werden.

Zum Erzeugen des dem Benutzertext entsprechenden Audiosignals wählt die Steuereinheit oder der Sprachsyntheseschaltkreis den zu dem vorgegebenen Projektschritt gehörenden Benutzertext aus beziehungsweise liest diesen aus dem Datenspeicher aus. Basierend auf dem Benutzertext, der wie beschrieben insbesondere als Textdatei oder Binärdatei vorliegt, erzeugt der Sprachsyntheseschaltkreis das Audiosignal unter Verwendung eines an sich bekannten Verfahrens zur Sprachsynthese. Mit anderen Worten wird der Benutzertext per Sprachsynthese in das Audiosignal umgewandelt.

In alternativen Ausfürhungsformen kann der zweite Teil der Benutzerinformationen auch als Audiodatei vorliegen. Die Steuereinheit kann dann die Audiodatei direkt auslesen, um das Audiosignal zu erzeugen. So lässt sich die Komplexität der Steuereinheit begrenzen.

In weiteren Ausführungen kann der Sprachsyntheseschaltkreis extern zu dem Akkupack vorliegen, beispielsweise auf dem Servercomputer. Dieser kann dann den umgewandelten Benutzertext, zum Beispiel als Audiodatei, als zweiten Teil der Benutzerinformationen an das Akkupack übertragen.

Gemäß zumindest einer Ausführungsform werden die Benutzerinformationen und/oder die weiteren Benutzerinformationen für den vorgegebenen Projektschritt mittels wenigstens einer weiteren Ausgabevorrichtung in visueller und/oder akustischer Form ausgegeben.

Die wenigstens eine weitere Ausgabevorrichtung kann beispielsweise ganz oder teilweise von der wenigstens einen externen Recheneinheit, beispielsweise einem mobilen elektronischen Gerät oder einem stationären Computersystem, enthalten sein.

Gemäß zumindest einer Ausführungsform werden die Benutzerinformationen und/oder die weiteren Benutzerinformationen für den vorgegebenen Projektschritt mittels der Ausgabevorrichtung und der wenigstens einen weiteren Ausgabevorrichtung, insbesondere jeder weiteren Ausgabevorrichtung der wenigstens einen weiteren Ausgabevorrichtung, synchronisiert ausgegeben werden.

Dies bedeutet insbesondere, dass die Ausgabevorrichtung und alle weiteren Ausgabevorrichtungen stets die Benutzerinformationen und/oder die weiteren Benutzerinformationen für denselben Projektschritt ausgeben. Diese Synchronisierung kann beispielsweise mittels der wenigstens einen externen Recheneinheit koordiniert und/oder sichergestellt werden.

Gemäß zumindest einer Ausführungsform werden die Benutzerinformationen und/oder die weiteren Benutzerinformationen für den vorgegebenen Projektschritt, insbesondere zusätzlich oder alternativ zu der Ausgabe mittels der weiteren Ausgabevorrichtung, in einem Benutzerprofil, welches auf der wenigstens einen externen Recheneinheit gespeichert ist, zum Abrufen durch den Benutzer bereitgestellt.

Gemäß zumindest einer Ausführungsform wird der Projektstatus zumindest teilweise abhängig von einer Benutzereingabe bestimmt.

Die Benutzereingabe kann dabei einer Eingabe durch den Benutzer in das Akkupack entsprechen. Alternativ kann die Benutzereingabe einer Benutzereingabe an dem Elektrogerät entsprechen und die Steuereinheit kann die Information über die Benutzereingabe von dem Elektrogerät erhalten. Alternativ kann die Benutzereingabe auch an einem externen elektronischen Gerät, beispielsweise einem elektronischen mobilen Endgerät, etwa einem Smartphone oder Tabletcomputer, erfolgen und die Steuereinheit erhält die Information über die Benutzereingabe über die Kommunikationsverbindung mit dem externen elektronischen Gerät.

Auf diese Weise kann der Benutzer der Steuereinheit also über die Benutzereingabe die Informationen zur Verfügung stellen, dass er aktuell eine bestimmte Anleitung benötigt oder dass der bisher aktuelle Projektschritt nun abgeschlossen ist.

Insbesondere kann das Akkupack ein Eingabegerät aufweisen, das zum Erfassen einer Benutzerinteraktion eingerichtet ist, und die Steuereinheit ist dazu eingerichtet, die Benutzereingabe basierend auf der erfassten Benutzerinteraktion zu erkennen.

Die Benutzerinteraktion kann beispielsweise als Einwirkung des Benutzers auf das Eingabegerät verstanden werden. Dabei kann das Eingabegerät beispielsweise einen mechanischen Schalter oder Taster, ein berührungsempfindliches Eingabeelement und/oder ein Mikrofon zum Erfassen der Benutzerinteraktion aufweisen.

Im Falle eines Schalters oder Tasters wirkt der Benutzer auf das Eingabegerät ein, indem er den Schalter oder Taster drückt oder betätigt. Im Falle eines berührungsempfindlichen Eingabeelements, beispielsweise eines Touchdisplays oder eines sonstigen Bereichs zur Berührungserkennung wirkt der Benutzer auf das Eingabegerät ein, indem er dieses berührt. Im Falle eines Mikrofons kann der Benutzer auf das Eingabegerät einwirken, indem er selbst einen Sprachbefehl oder eine Spracheingabe an das Mikrofon abgibt.

Die Verwendung eines Mikrofons zum Erfassen der Benutzerinteraktion ist besonders vorteilhaft, da der Benutzer dann gegebenenfalls von seiner aktuellen Tätigkeit oder Körperhaltung nicht abweichen muss, um die Benutzereingabe zu tätigen. Der Benutzer kann also beispielsweise vordefinierte Sprachbefehle, wie beispielsweise "weiter" oder "nächster Schritt" formulieren, um die Steuereinheit über den Projektstatus zu informieren.

Ferner kann der Benutzer auch durch die Einwirkung auf das Eingabegerät die Steuereinheit dazu veranlassen, dass der Projektstatus auf einen vorherigen, also insbesondere scheinbar bereits abgeschlossenen, Projektschritt gesetzt wird, dass eine Sprachausgabe wiederholt wird und so weiter. Hierzu können verschiedene Eingabegeräte oder verschiedene Sprachbefehle für unterschiedliche Zwecke vorgesehen sein.

Insbesondere ist also auch ein Rücksprung in einen vorherigen Projektschritt möglich, beispielsweise ausgelöst durch einen Sprachbefehl "zurück" oder dergleichen des Benutzers. Auch ein Wiederholen des jeweiligen Projektschritts ist denkbar.

In manchen Ausführungsformen kann die Steuereinheit auch dazu eingerichtet sein, den Benutzer über den Lautsprecher, gegebenenfalls unter Verwendung des Sprachsyntheseschaltkreises, durch eine sprachliche Aufforderung zu der Benutzereingabe aufzufordern.

Gemäß zumindest einer Ausführungsform wird ein initialer Projektschritt der Sequenz als der vorgegebene Projektschritt bestimmt, beispielsweise mittels der Steuereinheit. Nach dem Erzeugen des Audiosignals durch den Sprachsyntheseschaltkreis wird die Benutzereingabe erkannt und nach dem Erkennen der Benutzereingabe wird ein gemäß der Sequenz auf den initialen Projektschritt folgender, insbesondere unmittelbar folgender, Projektschritt der Sequenz als bevorstehender Projektschritt der Sequenz bestimmt, beispielsweise mittels der Steuereinheit. Mittels des Sprachsyntheseschaltkreises wird für den bevorstehenden Projektschritt ein dem zugehörigen Benutzertext entsprechendes weiteres Audiosignal erzeugt. Insbesondere wird mittels des Lautsprechers basierend auf dem weiteren Audiosignal eine weitere Sprachausgabe erzeugt.

Mit anderen Worten ist der Projektstatus zunächst durch den initialen Projektschritt gegeben und das Akkupack gibt die Sprachausgabe entsprechend dem für den initialen Projektschritt hinterlegten Benutzertext aus. Abhängig von der Benutzereingabe wird der Projektstatus dann um einen Projektschritt auf den bevorstehenden Projektschritt verschoben und die dementsprechende Sprachausgabe erzeugt.

In analoger Weise kann das Akkupack, insbesondere die Steuereinheit, der Sprachsyntheseschaltkreis und der Lautsprecher, für einen Projektschritt nach dem anderen gemäß der Sequenz jeweils nach einer entsprechenden Benutzereingabe die Sprachausgabe erzeugen, bis dies für alle Projektschritte der Sequenz erfolgt ist.

Gemäß zumindest einer Ausführungsform weist das Akkupack eine Kommunikationsschnittstelle zur drahtlosen Kommunikation mit der wenigstens einen externen Recheneinheit auf.

Die Kommunikationsschnittstelle kann insbesondere zur drahtlosen Kommunikation über ein Funknetzwerk eingerichtet sein, beispielsweise über ein Mobilfunknetz oder ein LPWAN. Das Funknetz kann insbesondere gemäß GSM, UMTS, LTE, 5G oder NB-IoT ausgestaltet sein. Ferner sind auch nicht-zellbasierte Ansätze wie etwa LoRa oder ZigBee möglich.

Gemäß zumindest einer Ausführungsform erhält die Steuereinheit, insbesondere über die Kommunikationsschnittstelle, ein Eingabesignal von der wenigstens einen externen Recheneinheit und erkennt die Benutzereingabe basierend auf dem Eingabesignal.

Die Benutzereingabe kann daher an der wenigstens einen externen Recheneinheit vorgenommen werden, beispielsweise an einem mobilen elektronischen Endgerät wie etwa einem Smartphone, einem Laptopcomputer oder einem Tabletcomputer. Hierzu kann beispielsweise eine entsprechende Applikation auf der wenigstens einen externen Recheneinheit zum Erfassen der Benutzereingabe implementiert werden oder die Eingabe kann über einen Browser oder einen entsprechenden Webserver an die Steuereinheit übermittelt werden.

Somit kann die Benutzereingabe auch getätigt werden und der Projektstatus dementsprechend auch abhängig von der Benutzereingabe bestimmt werden, wenn sich das Akkupack gerade nicht in Reichweite des Benutzers befindet, sodass er eine mechanische Taste an dem Akkupack nicht ohne einen Standortwechsel betätigen könnte beziehungsweise eine Spracheingabe über das Mikrofon nicht ohne Standortwechsel durchführen kann.

Gemäß zumindest einer Ausführungsform erhält die Steuereinheit eine Statusinformation betreffend den Projektstatus, insbesondere über die Kommunikationsschnittstelle, von der wenigstens einen externen Recheneinheit und bestimmt den Projektstatus zumindest teilweise abhängig von der Statusinformation.

Dementsprechend kann die wenigstens eine externe Recheneinheit basierend auf einer Benutzereingabe oder sonstigen Informationen selbst die Statusinformation erzeugen und dem Akkupack wie beschrieben bereitstellen.

Gemäß zumindest einer Ausführungsform wird, insbesondere mittels der Steuereinheit, ein Ausgangsstrom und/oder eine Ausgangsspannung der wenigstens einen Akkumulatorzelle gesteuert oder geregelt, um dem Elektrowerkzeug elektrische Leistung zum Betrieb des Elektrogeräts bereitzustellen. Der Ausgangsstrom und/oder die Ausgangsspannung wird, insbesondere mittels der Steuereinheit, überwacht und der Projektstatus zumindest teilweise abhängig von einem Ergebnis der Überwachung bestimmt.

Die elektrische Leistung kann dem Elektrogerät insbesondere zum Betreiben eines Motors des Elektrogeräts bereitgestellt werden.

Durch die Überwachung der Ausgangsspannung und/oder des Ausgangsstroms und eine entsprechende Rückkopplung in dem zeitlichen Verlauf der Ausgangsspannung und/oder des Ausgangsstroms von dem Elektrogerät, die sich beispielsweise in Form sogenannter Ripples ausdrückt, kann die Steuereinheit Informationen über einen Verlauf der Motorbewegung, beispielsweise einer Anzahl von Umdrehungen, eines Drehmoments des Motors und so weiter, beziehen. Auf diese Weise kann die Steuereinheit Informationen darüber erhalten, welche Tätigkeit beziehungsweise in welcher Häufigkeit oder Form eine bestimmte Tätigkeit durch das Elektrogerät durchgeführt wurde. Entsprechende Informationen zum Abgleich können in den Projektdaten hinterlegt sein.

Auf diese Weise kann die Steuereinheit jedenfalls zum Teil den Projektstatus abschätzen, ohne auf eine Benutzereingabe angewiesen zu sein.

Gemäß zumindest einer Ausführungsform erhält die Steuereinheit die Projektdaten, insbesondere über die Kommunikationsschnittstelle, von der wenigstens einen externen Recheneinheit, insbesondere über das Mobilfunknetz oder das LPWAN, und speichert diese auf dem Datenspeicher.

Mit anderen Worten kann ein Projektplan in Form der Projektdaten für die Sequenz von Projektschritten auf diese Weise über den Cloudserver, einen Webbrowser und einen entsprechenden Webserver, ein mobiles elektronisches Endgerät oder dergleichen in drahtloser Weise dem Akkupack zur Verfügung gestellt werden.

Beispielsweise können auf dem Akkupack beziehungsweise dem Datenspeicher auch verschiedene Sequenzen von Projektschritten gespeichert sein und je nachdem, welches Projekt aktuell ausgeführt werden soll, können die entsprechenden Projektdaten genutzt werden. Die Auswahl des Projekts kann beispielsweise ebenfalls durch eine Benutzereingabe, insbesondere einen Sprachbefehl, erfolgen.

Gemäß einem weiteren Aspekt der Erfindung wird ein System zur Projektunterstützung bei der Nutzung eines Elektrowerkzeugs mit einem Akkupack angegeben. Das System enthält dabei das Akkupack und wenigstens eine externe Recheneinheit. Das Akkupack weist einen Datenspeicher auf, der Projektdaten betreffend eine vordefinierte Sequenz von Projektschritten oder einen Teil der Sequenz speichert, wobei die Projektdaten für jeden Projektschritt der Sequenz zugehörige Benutzerinformationen beinhalten. Das Akkupack weist eine Steuereinheit und eine Ausgabevorrichtung zur Ausgabe visueller und/oder akustischer Inhalte auf, wobei die Steuereinheit dazu eingerichtet ist, die Ausgabevorrichtung anzusteuern, um für einen vorgegebenen Projektschritt der Sequenz von Projektschritten die zugehörige Benutzerinformation in visueller und/oder akustischer Form auszugeben. Die wenigstens eine externe Recheneinheit ist dazu eingerichtet, die Benutzerinformationen für den vorgegebenen Projektschritt und/oder weitere Benutzerinformationen für den vorgegebenen Projektschritt in visueller und/oder akustischer Form auszugeben, zum Beispiel mittels einer weiteren Ausgabevorrichtung, insbesondere der wenigstens einen externen Recheneinheit, und/oder zum Abrufen durch einen Benutzer bereitzustellen.

Weitere Ausführungsformen des erfindungsgemäßen Systems folgen direkt aus den verschiedenen Ausführungsformen des Verfahrens beziehungsweise umgekehrt. Insbesondere ist ein System gemäß der Erfindung dazu eingerichtet, ein erfindungsgemäßes Verfahren durchzuführen oder führt ein solches Verfahren durch.

Weitere Merkmale der Erfindung ergeben sich aus den Ansprüchen.

Im Folgenden wird die Erfindung unter Bezugnahme auf schematische Zeichnungen näher erläutert. Dabei zeigt:
Fig. eine schematische Blockdarstellung einer beispielhaften Ausführungsform eines erfindungsgemäßen Systems.

Das System enthält ein Akkupack 1 für ein Elektrogerät (nicht gezeigt) und eine externe Recheneinheit 12, beispielsweise ein Smartphone oder einen Servercomputer. Das Akkupack 1 enthält wenigstens eine Akkumulatorzelle 2 und eine Steuereinheit 4 mit einem Batteriemanagementschaltkreis 6. Der Batteriemanagementschaltkreis 6 ist mit den Akkumulatorzellen 2 und einer elektrischen Schnittstelle 7 des Akkupacks 1 verbunden. Über die elektrische Schnittstelle 7 kann das Akkupack 1 mit dem Elektrogerät verbunden werden, um diesem in den Akkumulatorzellen 2 gespeicherte elektrische Energie zum Betrieb des Elektrogeräts bereitzustellen. Der Batteriemanagementschaltkreis 6 kann dabei die Strom- und/oder Spannungsabgabe regeln oder steuern.

Außerdem weist das Akkupack 1 einen Datenspeicher 3 auf, welcher Projektdaten betreffend eine vordefinierte Sequenz von Projektschritten speichert. Insbesondere enthalten die Projektdaten für jeden der Projektschritte zugehörige Benutzerinformationen. Auf einem weiteren Datenspeicher (nicht gezeigt) der externen Recheneinheit 12 sind ebenfalls die Benutzerinformationen und/oder weitere Benutzerinformationen für jeden der Projektschritte gespeichert.

Das Akkupack 1 weist außerdem eine Ausgabevorrichtung, beispielsweise ein Display 13 und/oder einen Lautsprecher 11, auf die durch die Steuereinheit angesteuert werden können. Die Steuereinheit kann das Display 13 ansteuern, um für einen vorgegebenen Projektschritt die zugehörige Benutzerinformation in visueller Form auszugeben und/oder den Lautsprecher 11 ansteuern, um für den vorgegebenen Projektschritt die zugehörige Benutzerinformation in akustischer Form auszugeben.

Des Weiteren kann die externe Recheneinheit 12 die Benutzerinformationen für den vorgegebenen Projektschritt und/oder die weiteren Benutzerinformationen für den vorgegebenen Projektschritt in visueller und/oder akustischer Form ausgeben und/oder zum Abrufen durch einen Benutzer bereitstellen.

In verschiedenen Ausführungsformen liegt wenigstens ein Teil der Benutzerinformationen als Benutzertext vor, der auf dem Datenspeicher 3 gespeichert ist, beispielsweise als Textdatei oder Binärdatei. Die Textdatei oder Binärdatei kann die Steuereinheit 4, beispielsweise der Batteriemanagementschaltkreis 6, über eine Kommunikationsschnittstelle 8 des Akkupacks 1 zur drahtlosen Kommunikation von der externen Recheneinheit 12 oder einer weiteren externen Recheneinheit (nicht gezeigt) erhalten und auf dem Datenspeicher 3 speichern.

Des Weiteren weist das Akkupack 1, insbesondere die Steuereinheit 4, beispielsweise einen Sprachsyntheseschaltkreis 5 auf, der dazu eingerichtet ist, für einen vorgegebenen Projektschritt der Sequenz den zugehörigen Benutzertext aus dem Datenspeicher 3 auszulesen und basierend auf dem Benutzertext ein entsprechendes Audiosignal mittels eines bekannten Sprachsyntheseverfahrens zu erzeugen und dem Lautsprecher 11 bereitzustellen. Der Lautsprecher 11 erhält das Audiosignal und kann dann basierend auf dem Audiosignal eine Sprachausgabe an einen Benutzer des Elektrogeräts erzeugen, um diesen bei der Durchführung des Projekts zu unterstützen, insbesondere um dem Benutzer Informationen betreffend den vorgegebenen Projektschritt zur Verfügung zu stellen.

Um der Steuereinheit 4 die Information bereitzustellen, welches der aktuellen Projektstatus ist, kann beispielsweise der Benutzer mit dem Akkupack 1 über ein entsprechendes Eingabegerät interagieren und so eine Rückmeldung geben, dass er bereit für die nächste Sprachausgabe entsprechend dem nächsten Projektschritt ist. Beispielsweise kann das Eingabegerät ein Mikrofon 10 umfassen, sodass der Benutzer die Benutzereingabe durch einen entsprechenden Sprachbefehl tätigen kann. Die Steuereinheit 4 kann einen Sprachprozessor (nicht gezeigt) enthalten, um den Sprachbefehl entsprechend zu verarbeiten.

Alternativ oder zusätzlich kann das Eingabegerät einen mechanischen Taster 9 aufweisen, den der Benutzer betätigen kann, um anzuzeigen, dass er für die nächste Sprachausgabe bereit ist. Alternativ oder zusätzlich zu dem Taster 9 kann auch ein sonstiger mechanischer Schalter oder eine berührungsempfindliche Fläche oder dergleichen vorgesehen werden.

Eine alternative Möglichkeit zur Bestimmung des aktuellen Projektstatus besteht darin, dass der Benutzer die Benutzereingabe über ein externes elektronisches Gerät, beispielsweise ein Smartphone, tätig und das externe elektronische Gerät ein entsprechendes Signal drahtlos über die Kommunikationsschnittstelle 8 der Steuereinheit 4 zur Verfügung stellt.

### BEZUGSZEICHENLISTE:

- 1: Akkupack
- 2: Akkumulatorzellen
- 3: Datenspeicher
- 4: Steuereinheit
- 5: Sprachsyntheseschaltkreis
- 6: Batteriemanagementschaltkreis
- 7: elektrische Schnittstelle
- 8: Kommunikationsschnittstelle
- 9: Taster
- 10: Mikrofon
- 11: Lautsprecher
- 12: externe Recheneinheit
- 13: Display

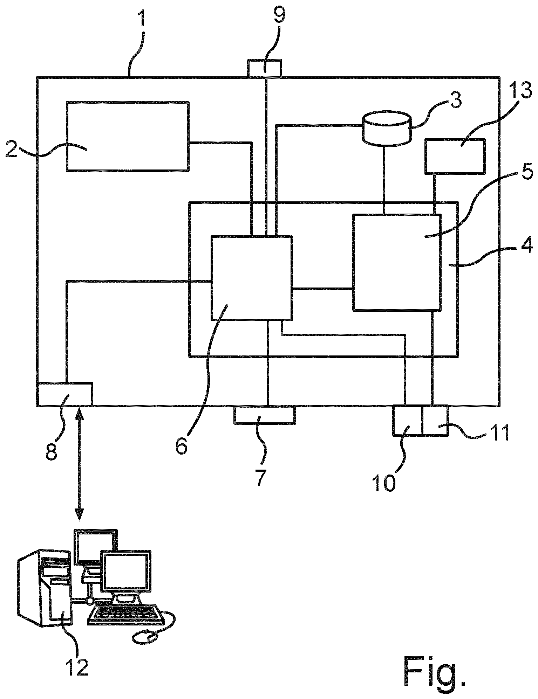

## Patentansprüche

1. Verfahren zur Projektunterstützung bei der Nutzung eines Elektrowerkzeugs mit einem Akkupack (1) zur Energieversorgung des Elektrowerkzeugs, wobei
- auf einem Datenspeicher (3) des Akkupacks (1) Projektdaten betreffend wenigstens einen Teil einer Sequenz von Projektschritten gespeichert werden, wobei wenigstens ein Teil der Projektschritte unter Verwendung des mit dem Akkupack (1) betreibbaren Elektrowerkzeugs durchgeführt werden kann, und die Projektdaten für jeden Projektschritt der Sequenz von Projektschritten zugehörige Benutzerinformationen beinhalten;
- mittels einer Ausgabevorrichtung (11, 13) des Akkupacks (1) für einen vorgegebenen Projektschritt der Sequenz von Projektschritten die zugehörige Benutzerinformation in visueller und/oder akustischer Form ausgegeben wird, wobei der vorgegebene Projektschritt abhängig von einem aktuellen Projektstatus aus der Sequenz ausgewählt wird, und der Projektstatus basierend auf einem vorgegebenen Zeitplan, auf einer Benutzereingabe oder auf Messungen von Betriebsparametern des Elektrowerkzeugs oder des Akkupack bestimmt wird; und
- die Benutzerinformationen für den vorgegebenen Projektschritt und/oder weitere Benutzerinformationen für den vorgegebenen Projektschritt mittels wenigstens einer externen Recheneinheit (12) in visueller und/oder akustischer Form ausgegeben werden.

2. Verfahren nach Anspruch 1, wobei wenigstens ein erster Teil der Benutzerinformationen für den vorgegebenen Projektschritt durch eine Bild- oder Videoausgabe auf einem Display (13) des Akkupacks (1) ausgegeben wird.

3. Verfahren nach einem der vorhergehenden Ansprüche, wobei wenigstens ein zweiter Teil der Benutzerinformationen für den vorgegebenen Projektschritt durch einen Lautsprecher (11) des Akkupacks (1) ausgegeben wird.

4. Verfahren nach Anspruch 3, wobei
- die Projektdaten den zweiten Teil der Benutzerinformationen für den vorgegebenen Projektschritt in Form eines Benutzertexts beinhalten;
- mittels eines Sprachsyntheseschaltkreises (5) des Akkupacks (1) ein dem Benutzertext entsprechendes Audiosignal erzeugt wird; und
- zum Ausgeben des zweiten Teils der Benutzerinformationen mittels des Lautsprechers (11) basierend auf dem Audiosignal eine Sprachausgabe erzeugt wird.

5. Verfahren nach einem der vorhergehenden Ansprüche, wobei die Benutzerinformationen und/oder die weiteren Benutzerinformationen für den vorgegebenen Projektschritt mittels wenigstens einer weiteren Ausgabevorrichtung (11, 13) in visueller und/oder akustischer Form ausgegeben werden.

6. Verfahren nach Anspruch 5, wobei die Benutzerinformationen und/oder die weiteren Benutzerinformationen für den vorgegebenen Projektschritt mittels der Ausgabevorrichtung (11, 13) und der wenigstens einen weiteren Ausgabevorrichtung synchronisiert ausgegeben werden.

7. Verfahren nach einem der Ansprüche 1 bis 4, wobei die Benutzerinformationen und/oder die weiteren Benutzerinformationen für den vorgegebenen Projektschritt in einem Benutzerprofil, welches auf der wenigstens einen externen Recheneinheit (12) gespeichert ist, zum Abrufen durch den Benutzer bereitgestellt werden.

8. Verfahren nach einem der vorhergehenden Ansprüche, wobei ein aktueller Projektstatus bestimmt wird und der vorgegebene Projektschritt abhängig von dem aktuellen Projektstatus aus der Sequenz ausgewählt wird.

9. Verfahren nach Anspruch 8, wobei der Projektstatus zumindest teilweise abhängig von einer Benutzereingabe bestimmt wird.

10. Verfahren nach einem der Ansprüche 8 oder 9, wobei
- ein Ausgangsstrom und/oder eine Ausgangsspannung wenigstens einer Akkumulatorzelle (2) des Akkupacks (1) gesteuert oder geregelt wird, um dem Elektrowerkzeug elektrische Leistung zum Betrieb des Elektrowerkzeugs bereitzustellen; und
- der Ausgangsstrom und/oder die Ausgangsspannung überwacht wird und der Projektstatus zumindest teilweise abhängig von einem Ergebnis der Überwachung bestimmt wird.

11. System zur Projektunterstützung bei der Nutzung eines Elektrowerkzeugs mit einem Akkupack (1) zur Energieversorgung des Elektrowerkzeugs, das System aufweisend das Akkupack (1) und wenigstens eine externe Recheneinheit (12), wobei
- das Akkupack (1) einen Datenspeicher (3) aufweist, der Projektdaten betreffend wenigstens einen Teil einer Sequenz von Projektschritten speichert, wobei wenigstens ein Teil der Projektschritte unter Verwendung des mit dem Akkupack betreibbaren Elektrowerkzeugs durchgeführt werden kann, und die Projektdaten für jeden Projektschritt der Sequenz zugehörige Benutzerinformationen beinhalten;
- das Akkupack (1) eine Steuereinheit (4) und eine Ausgabevorrichtung (11, 13) zur Ausgabe visueller und/oder akustischer Inhalte aufweist, wobei die Steuereinheit (4) dazu eingerichtet ist, die Ausgabevorrichtung (11, 13) anzusteuern, um für einen vorgegebenen Projektschritt der Sequenz von Projektschritten die zugehörige Benutzerinformation in visueller und/oder akustischer Form auszugeben, den vorgegebenen Projektschritt abhängig von einem aktuellen Projektstatus aus der Sequenz auszuwählen, und den Projektstatus basierend auf einem vorgegebenen Zeitplan, auf einer Benutzereingabe oder auf Messungen von Betriebsparametern des Elektrowerkzeugs oder des Akkupack zu bestimmen; und
- die wenigstens eine externe Recheneinheit (12) dazu eingerichtet ist, die Benutzerinformationen für den vorgegebenen Projektschritt und/oder weitere Benutzerinformationen für den vorgegebenen Projektschritt in visueller und/oder akustischer Form auszugeben.

12. System nach Anspruch 11, wobei die Ausgabevorrichtung (11, 13) ein Display (13) aufweist und die Steuereinheit (4) dazu eingerichtet ist, wenigstens einen ersten Teil der Benutzerinformationen für den vorgegebenen Projektschritt durch eine Bild- oder Videoausgabe auf dem Display (13) auszugeben.

13. System nach einem der Ansprüche 11 oder 12, wobei die Ausgabevorrichtung (11, 13) einen Lautsprecher (11) aufweist und die Steuereinheit (4) dazu eingerichtet ist, wenigstens einen zweiten Teil der Benutzerinformationen für den vorgegebenen Projektschritt durch den Lautsprecher (11) auszugeben.

14. System nach Anspruch 13, wobei
- die Projektdaten den zweiten Teil der Benutzerinformationen für den vorgegebenen Projektschritt in Form eines Benutzertexts beinhalten;
- die Steuereinheit (4) einen Sprachsyntheseschaltkreis (5) aufweist, der dazu eingerichtet ist, ein dem Benutzertext entsprechendes Audiosignal zu erzeugen; und
- der Lautsprecher (11) dazu eingerichtet ist, basierend auf dem Audiosignal eine Sprachausgabe zu erzeugen.

15. System nach einem der Ansprüche 11 bis 14, wobei die Steuereinheit (4) dazu eingerichtet ist, einen aktuellen Projektstatus zu bestimmen und den vorgegebenen Projektschritt abhängig von dem aktuellen Projektstatus aus der Sequenz auszuwählen.

16. System nach Anspruch 15, wobei die Steuereinheit (4) dazu eingerichtet ist, den Projektstatus zumindest teilweise abhängig von einer Benutzereingabe zu bestimmen.

17. System nach Anspruch 16, wobei das Akkupack (1) ein Eingabegerät (9, 10) aufweist, das zum Erfassen einer Benutzerinteraktion eingerichtet ist, und die Steuereinheit (4) dazu eingerichtet ist, die Benutzereingabe basierend auf der erfassten Benutzerinteraktion zu erkennen.

## Claims

1. A method for project support in using an electric tool with a battery pack (1) for supplying the electric tool with energy, wherein
- project data relating to at least a part of a sequence of project steps is stored on a data storage (3) of the battery pack (1), wherein at least a part of the project steps may be performed using the electric tool operable by the battery pack (1), and the project data includes associated user information for each project step of the sequence of project steps;
- for a predetermined project step of the sequence of project steps, the associated user information is output in visual and/or acoustic form by an output device (11, 13) of the battery pack (1), wherein the predetermined project step is selected depending on a current project status from the sequence, and the project status is determined based on a predetermined schedule, on a user input or on measurements of operating parameters of the electric tool or of the battery pack; and
- the user information for the predetermined project step and/or further user information for the predetermined project step are output by at least one external computing unit (12) in visual and/or acoustic form.

2. The method according to claim 1, wherein at least a first part of the user information for the predetermined project step is output by an image output or video output on a display (13) of the battery pack (1).

3. The method according to any one of the preceding claims, wherein at least a second part of the user information for the predetermined project step is output by a speaker (11) of the battery pack (1).

4. The method according to claim 3, wherein
- the project data includes the second part of the user information for the predetermined project step in the form of a user text;
- an audio signal corresponding to the user text is generated by a voice synthesis circuit (5) of the battery pack (1); and
- for outputting the second part of the user information, a voice output is generated based on the audio signal by the speaker (11).

5. The method according to any one of the preceding claims, wherein the user information and/or the further user information for the predetermined project step are output in visual and/or acoustic form by at least one further output device (11, 13).

6. The method according to claim 5, wherein the user information and/or the further user information for the predetermined project step are output in synchronized manner by the output device (11, 13) and the at least one further output device.

7. The method according to any one of claims 1 to 4, wherein the user information and/or the further user information for the predetermined project step are provided in a user profile, which is stored on the at least one external computing unit (12), for retrieval by the user.

8. The method according to any one of the preceding claims, wherein a current project status is determined and the predetermined project step is selected from the sequence depending on the current project status.

9. The method according to claim 8, wherein the project status is determined at least partially depending on a user input.

10. The method according to any one of claims 8 or 9, wherein
- an output current and/or an output voltage of at least one battery cell (2) of the battery pack (1) are controlled or regulated to provide electrical power to the electric tool for the operation of the electric tool; and
- the output current and/or the output voltage are monitored and the project status is determined at least partially depending on a result of the monitoring.

11. A system for project support in using an electric tool with a battery pack (1) for supplying the electric tool with energy, the system comprising the battery pack (1) and at least one external computing unit (12), wherein
- the battery pack (1) comprises a data storage (3), which stores project data relating to at least a part of a sequence of project steps, wherein at least a part of the project steps may be performed using the electric tool operable by the battery pack, and the project data includes associated user information for each project step of the sequence;
- the battery pack (1) comprises a control unit (4) and an output device (11, 13) for output of visual and/or acoustic contents, wherein the control unit (4) is configured to control the output device (11, 13) to output, for a predetermined project step of the sequence of project steps, the associated user information in visual and/or acoustic form, to select the predetermined project step depending on a current project status from the sequence, and to determine the project status based on a predetermined schedule, on a user input or on measurements of operating parameters of the electric tool or of the battery pack; and
- the at least one external computing unit (12) is configured to output the user information for the predetermined project step and/or further user information for the predetermined project step in visual and/or acoustic form.

12. The system according to claim 11, wherein the output device (11, 13) comprises a display (13) and the control unit (4) is configured to output at least a first part of the user information for the predetermined project step by an image or video output on the display (13).

13. The system according to any one of claims 11 or 12, wherein the output device (11, 13) comprises a speaker (11) and the control unit (4) is configured to output at least a second part of the user information for the predetermined project step by the speaker (11).

14. The system according to claim 13, wherein
- the project data includes the second part of the user information for the predetermined project step in the form of a user text;
- the control unit (4) comprises a voice synthesis circuit (5), which is configured to generate an audio signal corresponding to the user text; and
- the speaker (11) is configured to generate a voice output based on the audio signal.

15. The system according to any one of claims 11 to 14, wherein the control unit (4) is configured to determine a current project status and to select the predetermined project step from the sequence depending on the current project status.

16. The system according to claim 15, wherein the control unit (4) is configured to determine the project status at least partially depending on a user input.

17. The system according to claim 16, wherein the battery pack (1) comprises an input device (9, 10), which is configured for capturing a user interaction, and the control unit (4) is configured to recognize the user input based on the captured user interaction.

## Revendications

1. Procédé de support de projet lors de l'utilisation d'un outil électrique comprenant un bloc d'accumulateurs (1) destiné à fournir de l'énergie à l'outil électrique,
- des données de projet relatives à au moins une partie d'une séquence d'étapes de projet étant mémorisées dans une mémoire de données (3) du bloc d'accumulateurs (1), au moins une partie des étapes de projet pouvant être réalisée à l'aide de l'outil électrique pouvant fonctionner avec le bloc d'accumulateurs (1), et les données de projet contenant des informations d'utilisateur associées à chaque étape de projet de la séquence d'étapes de projet ;
- les informations d'utilisateur associées étant délivrées en sortie sous forme visuelle et/ou acoustique pour une étape de projet spécifiée de la séquence d'étapes de projet au moyen d'un dispositif de sortie (11, 13) du bloc d'accumulateurs (1), l'étape de projet spécifiée étant sélectionnée dans la séquence en fonction d'un état de projet actuel, et l'état de projet étant déterminé sur la base d'un programme échelonné spécifié, d'une entrée d'utilisateur ou de mesures de paramètres de fonctionnement de l'outil électrique ou du bloc d'accumulateurs ; et
- les informations d'utilisateur pour l'étape de projet spécifiée et/ou d'autres informations d'utilisateur pour l'étape de projet spécifiée étant délivrées en sortie sous forme visuelle et/ou acoustique au moyen d'au moins une unité informatique extérieure (12).

2. Procédé selon la revendication 1, au moins une première partie des informations d'utilisateur pour l'étape de projet spécifiée étant délivrée en sortie par le biais d'une sortie image ou vidéo sur un afficheur (13) du bloc d'accumulateurs (1).

3. Procédé selon l'une des revendications précédentes, au moins une deuxième partie des informations d'utilisateur pour l'étape de projet spécifiée étant délivrée en sortie par le biais d'un haut-parleur (11) du bloc d'accumulateurs (1).

4. Procédé selon la revendication 3,
- les données de projet contenant la deuxième partie des informations d'utilisateur pour l'étape de projet spécifiée sous la forme d'un texte d'utilisateur ;
- un signal audio correspondant au texte d'utilisateur étant généré au moyen d'un circuit de synthèse vocale (5) du bloc d'accumulateurs (1) ; et
- une sortie vocale étant générée au moyen du haut-parleur (11) sur la base du signal audio afin de délivrer en sortie la deuxième partie des informations d'utilisateur.

5. Procédé selon l'une des revendications précédentes, les informations d'utilisateur et/ou les autres informations d'utilisateur pour l'étape de projet spécifiée étant délivrées en sortie sous forme visuelle et/ou acoustique au moyen d'au moins un autre dispositif de sortie (11, 13) .

6. Procédé selon la revendication 5, les informations d'utilisateur et/ou les autres informations d'utilisateur pour l'étape de projet spécifiée étant délivrées en sortie de manière synchronisée au moyen du dispositif de sortie (11, 13) et de l'au moins un autre dispositif de sortie.

7. Procédé selon l'une des revendications 1 à 4, les informations d'utilisateur et/ou les autres informations d'utilisateur pour l'étape de projet spécifiée étant fournies pour être récupérées par l'utilisateur dans un profil d'utilisateur qui est mémorisé sur l'au moins une unité informatique extérieure (12).

8. Procédé selon l'une des revendications précédentes, un état de projet actuel étant déterminé et l'étape de projet spécifié étant sélectionnée dans la séquence en fonction de l'état de projet actuel.

9. Procédé selon la revendication 8, l'état de projet étant déterminé au moins partiellement en fonction de l'entrée d'utilisateur.

10. Procédé selon l'une des revendications 8 ou 9,
- un courant de sortie et/ou une tension de sortie d'au moins un élément accumulateur (2) du bloc d'accumulateurs (1) étant commandé(e)s ou régulé(e)s afin de fournir à l'outil électrique l'énergie électrique pour faire fonctionner l'outil électrique ; et
- le courant de sortie et/ou la tension de sortie étant surveillé(e)s et l'état de projet étant déterminé au moins partiellement en fonction d'un résultat de la surveillance.

11. Système de support de projet lors de l'utilisation d'un outil électrique comprenant un bloc d'accumulateurs (1) destiné à fournir de l'énergie à l'outil électrique, le système comportant le bloc d'accumulateurs (1) et au moins une unité informatique extérieure (12),
- le bloc d'accumulateurs (1) comportant une mémoire de données (3) qui mémorise des données de projet relatives à au moins une partie d'une séquence d'étapes de projet, au moins une partie des étapes de projet pouvant être exécutée à l'aide de l'outil électrique qui peut fonctionner avec le bloc d'accumulateurs, et les données de projet pour chaque étape de projet de la séquence contenant des informations d'utilisateur associées ;
- le bloc d'accumulateurs (1) comportant une unité de commande (4) et un dispositif de sortie (11, 13) destiné à délivrer en sortie un contenu visuel et/ou acoustique, l'unité de commande (4) étant conçue pour commander le dispositif de sortie (11, 13), afin de pouvoir délivrer en sortie l'information d'utilisateur associée sous forme visuelle et/ou acoustique pour une étape de projet spécifiée de la séquence d'étapes de projet, sélectionner l'étape de projet spécifiée dans la séquence en fonction d'un état de projet actuel, et déterminer l'état de projet sur la base d'un programme échelonné spécifié, d'une entrée d'utilisateur ou de mesures de paramètres de fonctionnement de l'outil électrique ou du bloc d'accumulateurs ; et
- l'au moins une unité informatique extérieure (12) étant conçue pour délivrer en sortie les informations d'utilisateur pour l'étape de projet spécifiée et/ou d'autres informations d'utilisateur pour l'étape de projet spécifiée sous forme visuelle et/ou acoustique.

12. Système selon la revendication 11, le dispositif de sortie (11, 13) comportant un afficheur (13) et l'unité de commande (4) étant conçue pour délivrer en sortie sur l'afficheur (13) au moins une première partie des informations d'utilisateur pour l'étape de projet spécifiée par le biais d'une sortie image ou vidéo.

13. Système selon l'une des revendications 11 ou 12, le dispositif de sortie (11, 13) comportant un haut-parleur (11) et l'unité de commande (4) étant conçue pour délivrer en sortie au moins une deuxième partie des informations d'utilisateur pour l'étape de projet spécifiée par le biais du haut-parleur (11).

14. Système selon la revendication 13,
- les données de projet contenant la deuxième partie des informations d'utilisateur pour l'étape de projet spécifiée sous la forme d'un texte d'utilisateur ;
- l'unité de commande (4) comportant un circuit de synthèse vocale (5) qui est conçu pour générer un signal audio correspondant au texte d'utilisateur ; et
- le haut-parleur (11) étant conçu pour générer une sortie vocale sur la base du signal audio.

15. Système selon l'une des revendications 11 à 14, l'unité de commande (4) étant conçue pour déterminer un état de projet actuel et pour sélectionner l'étape de projet spécifiée dans la séquence en fonction de l'état de projet actuel.

16. Système selon la revendication 15, l'unité de commande (4) étant conçue pour déterminer l'état de projet au moins partiellement en fonction de l'entrée d'utilisateur.

17. Système selon la revendication 16, le bloc d'accumulateurs (1) comportant un appareil d'entrée (9, 10) qui est conçu pour détecter une interaction d'utilisateur, et l'unité de commande (4) étant conçue pour reconnaître l'entrée d'utilisateur en fonction de l'interaction d'utilisateur détectée.
